(19) Europäisches Patentamt

European Patent Office

Office européen des brevets

(11) **EP 0 854 054 B1**

(12) **EUROPEAN PATENT SPECIFICATION**

(45) Date of publication and mention
of the grant of the patent:
**25.08.2004 Bulletin 2004/35**

(21) Application number: **97924333.4**

(22) Date of filing: **06.06.1997**

(51) Int Cl.[7]: **B60C 5/14**, B60C 5/00,
B60C 9/22, B29D 30/30,
B29D 30/06, B60C 1/00,
B29D 30/08

(86) International application number:
**PCT/JP1997/001926**

(87) International publication number:
**WO 1998/001309 (15.01.1998 Gazette 1998/02)**

(54) **PNEUMATIC TIRE AND METHOD FOR MANUFACTURING THE SAME**

LUFTREIFEN UND VERFAHREN ZU DESSEN HERSTELLUNG

PNEU ET SON PROCEDE DE FABRICATION

(84) Designated Contracting States:
**DE FR**

(30) Priority: **03.07.1996 JP 17388596**

(43) Date of publication of application:
**22.07.1998 Bulletin 1998/30**

(73) Proprietor: **THE YOKOHAMA RUBBER CO., LTD.
Tokyo, 105 (JP)**

(72) Inventors:
 • **SHIDA, Zenichiro
 2-1, Oiwake Hiratsuka-shi Kanagawa 254 (JP)**
 • **HASHIMURA, Yoshiaki
 2-1, Oiwake Hiratsuka-shi Kanagawa 254 (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 633 152        EP-B- 0 337 279
GB-A- 2 179 307        JP-A- 5 329 961
JP-A- 6 255 314        JP-A- 7 149 108
JP-A- 8 132 553        JP-A- 9 029 858
US-A- 4 928 741**

**Description**

TECHNICAL FIELD

The present invention relates to a pneumatic tire having an air permeation preventive layer formed from a resin film comprised mainly of a thermoplastic resin, wherein a pneumatic tire superior in air permeation preventive property which prevents splice opening of the air permeation preventive layer (peeling of the splice portion), and a process for producing the same.

BACKGROUND ART

The inner surface of a pneumatic tire has conventionally been provided with an inner liner layer (air permeation preventive layer) comprised of a low gas permeation rubber such as a halogenated butyl rubber so as to prevent leakage of air and maintain a constant tire air pressure.

However, since a halogenated butyl rubber has a poor affinity and low adhesiveness with other rubbers, a rubber sheet called a tie rubber is interposed, when forming the air permeation preventive layer. Therefore, there is the problem that the air permeation preventive layer inevitably becomes thicker and the weight of the tire is increased.

EP-B-0 337 279 e.g. discloses a gas barrier film laminated between and bonded to two vulcanizable elastomeric surfaces to reduce the weight as compared to a conventional halogenated butyl rubber for innerliners.

Additionally a method for producing an out permeation preventive layer by winding an innerliner in form of a narrow strip as a helical axially extending winding onto a tire making drum is disclosed in GB-A-2 179 307.

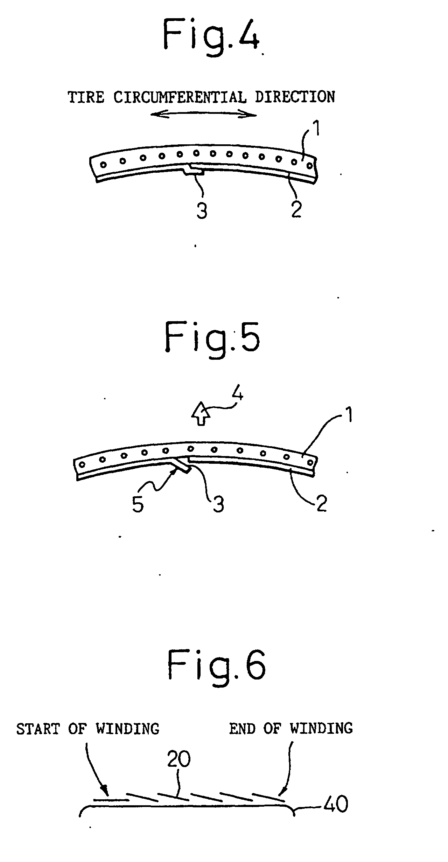

Therefore, in recent years, to lighten the weight of the tire, it has been proposed to make the air permeation preventive layer with a low air permeation resin film (for example, Japanese Unexamined Patent Publication (Kokai) No. 5-329961 and Japanese Unexamined Patent Publication (Kokai) No. 6-40207). However, a resin film does not have the tackiness like rubber before vulcanization. Thus, when forming the tire, as shown in Fig. 4, the resin film 2 is superposed over the inner surface of the carcass layer 1 (inner circumference of tire) and the two ends of the resin film 2 are overlapped and joined to form a splice portion 3. After this first forming process, as shown in Fig. 5, the inside pressure is applied to cause the tire to inflate (lift) in the direction of the arrow 4 (outside direction of tire). There is the problem that this inflation causes the splice portion 3 to open and creates a splice opening 5 which lowers the seal of the tire after vulcanization.

DISCLOSURE OF INVENTION

Objects of the present invention are to provide a pneumatic tire which is light in weight and superior in air permeation preventive property even when a resin film is used as the air permeation preventive layer and which is free from the occurrence of splice openings in the air permeation preventive layer at the time of forming the resin film tire and to provide a process for producing the same.

In accordance with to the present invention, there is provided a pneumatic tire having an air permeation preventive layer according to claim 1.

In accordance with to the present invention, there is also provided a pneumatic tire according to claim 1, wherein the thickness of the slit film is 0.02 to 1.1 mm.

BRIEF DESCRIPTION OF DRAWINGS

The present invention will be explained in further detail below with reference to the drawings.

Fig. 1 is a half sectional view in the meridian direction of one example of a pneumatic tire according to the present invention.

Fig. 2 is an explanatory view of the state of wrapping the slit film on the tire making drum when producing the pneumatic tire of the present invention.

Fig. 3 is a sectional view of key parts showing the state of arrangement of the tackifier at overlapping portions of the slit film.

Fig. 4 is a sectional view of key parts showing a first forming step where the resin film is superposed on the inner surface of the carcass layer when forming a conventional pneumatic tire.

Fig. 5 is a sectional view of key parts showing the state where slice opening occurs when inflating the tire in the second forming step after the first forming step of Fig. 4.

Fig. 6 is a sectional explanatory view of one example of the method of wrapping a slit film around the outer circumference of a tire making drum.

Fig. 7 is a sectional explanatory view of one example of the method of wrapping a slit film around the outer circumference of a tire making drum.

Fig. 8 is a sectional explanatory view of one example of the method of wrapping a slit film around the outer circumference of a tire making drum.

Fig. 9 is a sectional explanatory view of one example of the method of wrapping a slit film around the outer circumference of a tire making drum.

Fig. 10 is a sectional explanatory view of one example of the method of wrapping a slit film around the outer circumference of a tire making drum.

Fig. 11 is a sectional explanatory view of one example of the method of wrapping a slit film around the outer circumference of a tire making drum.

BEST MODE FOR CARRYING OUT THE INVENTION

To achieve the above object, according to the present invention, there is provided a pneumatic tire having an air permeation preventive layer at the inner wall surface of the tire formed by adhering a resin film comprised mainly of a thermoplastic resin to the inside wall surface wherein the resin film is narrowly cut to form a slit film and the slit film is spirally wound continuously in the tire circumferential direction with a partial overlap of its edges to form the air permeation preventive layer.

Since a slit film (a film in the form of a batter) comprised mainly of a thermoplastic resin is used in this way, it is possible to make the air permeation preventive layer thinner compared with the case of use of a halogenated butyl rubber as in the past, and therefore, it is possible to lighten the weight of the tire. Further, since the slit film is spirally wound at the inner circumference of the tire to form the air permeation preventive layer, there is no splice portion extending in the width direction of the tire as in the past, and therefore, there is no occurrence of splice opening.

The process for producing a pneumatic tire according to the present invention comprises continuously wrapping a slit film, obtained by narrowly cutting a resin film comprised mainly of a thermoplastic resin, in a spiral around the outer circumference of a tire making drum with partial overlap of its edges to form an air permeation preventive layer, arranging a carcass layer on the air permeation preventive layer to form a green tire, then vulcanizing the green tire.

Since it is sufficient to continuously wrap the slit film in a spiral on the outer circumference of the tire making drum in this way, it becomes possible to easily produce the pneumatic tire. Further, when producing tires of different sizes, while it had been necessary in the past to prepare an air permeation preventive layer member tailored to those dimensions (widths), since a slit film is wound in a spiral in the present invention, it is possible to handle tires of many sizes with a single type of member, and therefore, the productivity is improved.

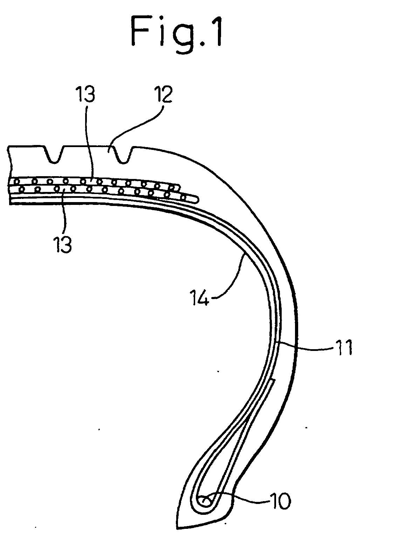

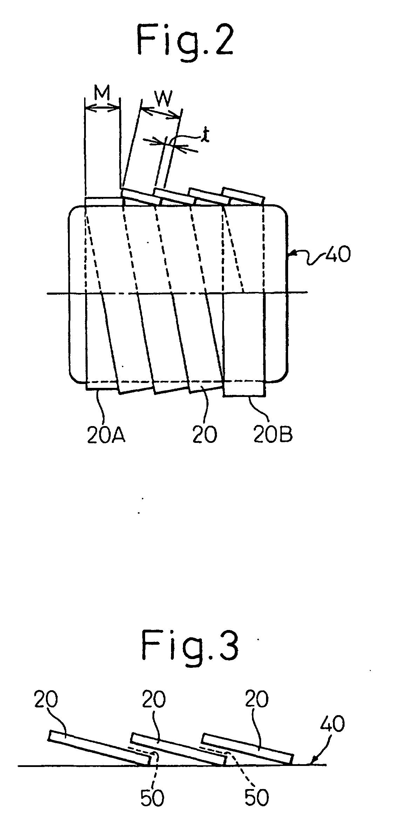

The pneumatic tire according to the present invention, as shown in Fig. 1, is comprised of a pair of left and right bead cores 10, 10 between which a carcass layer 11 is attached. At a tread portion 12, two belt layers 13, 13 are arranged stretching over one circumference of the tire. At the inner circumference of the tire, a slit film comprising a resin film comprised mainly of a thermoplastic resin is spirally wound continuously in a spiral to form an air permeation preventive layer 14 substantially covering the inner circumference of the carcass layer 11. The air permeation preventive layer 14 need not be at the innermost surface of the tire and may be made of multiple layers.

To produce this pneumatic tire, first, as shown in Fig. 2, the slit film 20 is spirally wound around the outer circumference of a tire making drum 40 so as to substantially cover the surface of the making drum 40.

In this case, it is preferable that once circumference's worth of the starting end 20A and the finishing end 20B of the slit film 20 have a zero amount of offset M. The portions other than the starting end and the finishing end are continuously wrapped in a spiral so that the surface of the making drum 40 is substantially not exposed.

The thickness of the slit film 20 is preferably 0.02 to 1.1 mm. If the thickness is less than 0.02 mm, it is too thin and the shapeability is decreased, while if over 1.1 mm, the weight of the tire increases, which is undesirable from the standpoint of reducing the weight.

The width W of the slit film is preferably from 5 to 100 mm, particularly from 10 to 50 mm. If the width is less than 5 mm, the number of times of wrapping increases, so the shapeability falls, while if the width is over 100 mm, there is larger waste of the material at the starting end and the finishing end of the slit film 20.

Further, when spirally wrapping the slit film 20, it is sufficient to make the edges of the slit film 20 overlap. The width of overlap t should be 0.1W to 0.5W, preferably is in the range of 0.2W to 0.4W, based on the width W of the film, though it may be zero if the air permeation preventive layer 14 substantially covers the inner surface of the carcass layer 11. If the width is less than 0.1W, it is too narrow and there is a tendency for the overlapping parts of the slit film to open up from each at the time of the second forming step, while if the width is more than 0.5W, there is greater waste of the film material - which is uneconomical.

When overlapping the slits in this way, as shown in Fig. 3, a tackifier layer 50 may be provided between the overlapping parts of the slit film 20, whereby it becomes possible to further eliminate the opening of the overlapping parts of the slit film at the time of the second forming step and to further raise the air permeation preventive property.

As the material of the tackifier layer 50 used at this time, an adhesive which manifests its adhesive property by the heat and pressure at the time of vulcanization, for example, a phenol resin (Chemlock 220), chlorinated rubber (Chemlock 205), and isocyanate (Chemlock 402) adhesive can be exemplified.

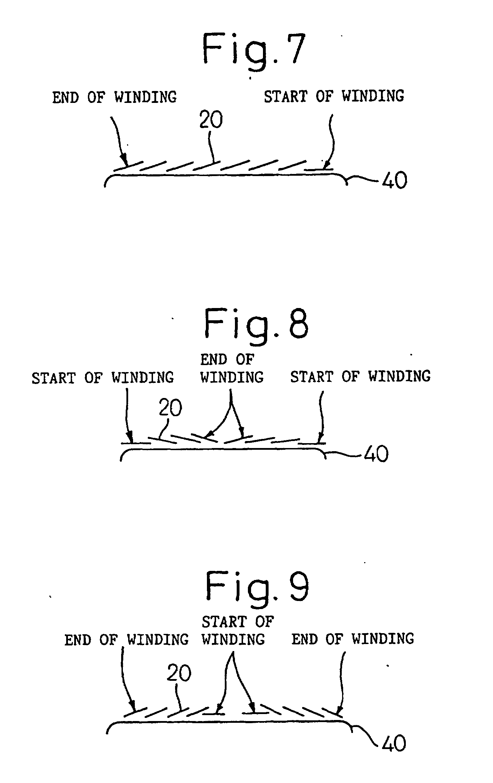

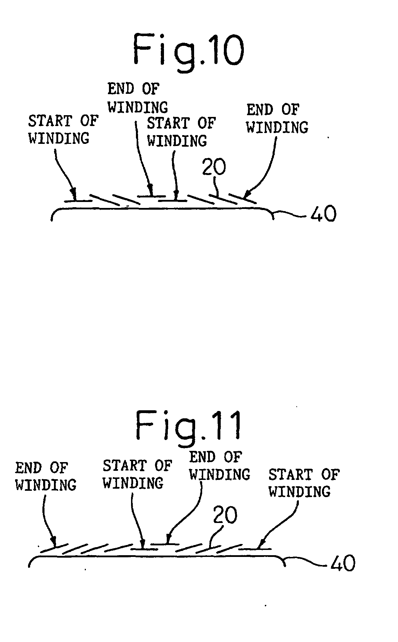

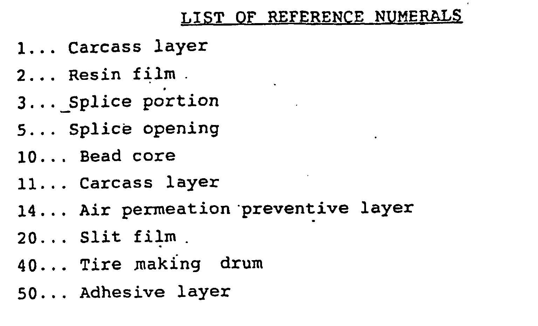

The means for spirally wrapping the slit film 20 around the outer circumference of the making drum 40 is not particularly limited. For example, it is possible to use the means shown in Fig. 6 to Fig. 11. In Fig. 6, the slit film 20 is wound from the left end to the right end of the making drum 40. In Fig. 7, the slit film 20 is wound from the right end to the left end of the making drum 40. In Fig. 8, the slit film 20 is wound from the right end and the left end of the making drum 40 to the center. In Fig. 9, the slit film 20 is wound from the center of the making drum 40 to the right end and the left end. In Fig. 10, the slit film 20 is wound from the left end of the making drum 40 to the center and from the center to the right end. In Fig. 11, the slit film 20 is wound from the right end of the making drum 40 to the center and from the center to the left end.

After spirally winding the slit film 20 around the making drum 40 in this way, the carcass layer is superposed on top and the green tire formed by the usual method, then the green tire is vulcanized to obtain the pneumatic tire.

The thermoplastic resin constituting the slit film 20 used in the present invention has an air permeation coefficient of not more than $25 \times 10^{-12}$ cm$^3$·cm/cm$^2$·sec·cmHg, preferably not more than $5 \times 10^{-12}$ cm$^3$·cm/cm$^2$·sec·cmHg, and a Young's modulus of 1 to 500 MPa, preferably 10 to 300 MPa. If the air permeation coefficient is more than $25 \times 10^{-12}$ cm$^3$·cm/cm$^2$·sec·cmHg, it is necessary to increase the thickness of the air permeation preventive layer to maintain the air permeation coefficient, which runs counter to the object of reducing the weight of the tire. Further, if the Young's modulus of the film is less than 1 MPa, wrinkles etc. will occur at the time of forming the tire and the shapeability will be reduced, while if the Young's modulus is more than 500 MPa, problems will arise in terms of the durability.

As the thermoplastic resin, for example, polyamide resins (for example, nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 6/6T copolymer, nylon 66/PP copolymer, and nylon 66/PPS copolymer) and their N-alcohol alkylates, for example, a methoxymethylate of 6-nylon, a methoxymethylate of 6-610-nylon, and a methoxymethylate of 612-nylon, polyester resins (for example, polybutylene terephthalate (PBT), polyethylene terephthalate (PET), polyethylene isophthalate (PE10), PET/PEI copolymer, polyacrylate (PAR), polybutylene naphthalate (PBN), liquid crystal polyester, polyoxyalkylene diimidate/polybutyrate terephthalate copolymer, and other aromatic polyesters), polynitrile resins (for example, polyacrylonitrile (PAN), polymethacrylonitrile, acrylonitrile/styrene copolymer (AS), methacrylonitrile/styrene copolymer, and methacrylonitrile/styrene/butadiene copolymer), polymethacrylate resins (for example, polymethyl methacrylate (PMMA) and polyethyl methacrylate), polyvinyl resins (for example, vinyl acetate, polyvinyl alcohol (PVA), vinyl alcohol/ethylene copolymer (EVOH), polyvinylidene chloride (PVDC), polyvinyl chloride (PVC), vinyl chloride/vinylidene chloride copolymer, vinylidene chloride/methylacrylate copolymer, vinylidene chloride/acrylonitrile copolymer), cellulose resins (for example, cellulose acetate and cellulose acetate butyrate), fluororesins (for example, polyvinylidene fluoride (PVDF), polyvinyl fluoride (PVF), polychlorofluoroethylene (PCTFE), and tetrafluoroethylene/ethylene copolymer), imide resins (for example, aromatic polyimide (PI)), etc. may be mentioned. Two or more of these resins may be used as well.

Further, the thermoplastic film used in the present invention may be a film obtained by blending an elastomer with the above thermoplastic resins.

The elastomer component blended with the thermoplastic resin is not particularly limited in type or amount so long as it forms a composition in a blended state with the thermoplastic resin and, as a result, gives the above air permeation coefficient and Young's modulus. As such as elastomer, for example, the following may be mentioned:

Diene rubbers and their hydrogenates (for example, NR, IR, epoxylated natural rubber, SBR, BR (high cis BR and low cis BR), NBR, hydrogenated NBR, hydrogenated SBR), olefin rubbers (for example, ethylene-propylene rubber (EPDM, EPM), maleic acid-modified ethylene-propylene rubber (M-EPM)), IIR, isobutylene and aromatic vinyl or diene monomer copolymers), acryl rubber (ACM), ionomers, halogen-containing rubbers (for example, Br-IIR, CI-IIR, a bromide of isobutylene-p-methylstyrene copolymer (Br-IPMS), CR, hydrin rubbers (CHC, CHR), chlorosulfonated polyethylene (CSM), chlorinated polyethylene (CM), maleic acid-modified chlorinated polyethylene (M-CM)), silicone rubber (for example, methylvinyl silicone rubber, dimethyl silicone rubber, methylphenylvinyl silicone rubber), sulfur-containing rubbers (for example, polysulfide rubber), fluororubber (for example, vinylidene fluoride rubbers, fluorine-containing vinylether rubbers, tetrafluoroethylene-propylene rubbers, fluorine-containing silicone rubbers, fluorine-containing phosphagen rubbers), thermoplastic elastomers (for example, styrene elastomers, olefin elastomers, ester elastomers, urethane elastomers, and polyamide elastomers), etc. may be mentioned. Two or more of these rubbers may be used as well.

The process for producing the thermoplastic film comprised of the blend of the thermoplastic comprises melt-mixing the thermoplastic resin component and elastomer component (unvulcanized component in the case of rubber) by a twin-screw kneader/extruder etc. to cause the elastomer component to disperse in the thermoplastic resin forming the continuous phase. When vulcanizing the elastomer component, the vulcanization agent may be added during the mixing so as to cause the elastomer component to dynamically vulcanize. Further, the various compounding agents (except vulcanization agent) for the thermoplastic resin or the elastomer component may be added during the mixing, but preferably are premixed before the mixing. The mixer used for mixing the thermoplastic resin and elastomer component is not particularly limited and may be a screw extruder, kneader, Banbury mixer, twin-screw kneader/extruder, etc. Among these, a twin-screw kneader/extruder is preferably used for the mixing of the thermoplastic resin and the elastomer component and the dynamic vulcanization of the elastomer component. Further, two or more types of mixers may be used for successive mixing. As the conditions for the melt mixing, the temperature may be any temperature above that where the thermoplastic resin melts. Further, the shear rate at the time of mixing is preferably 1000 to 7500 sec$^{-1}$. The mixing time is 30 sec to 10 minutes. Further, when adding a vulcanization agent, the vulcanization time after the addition is preferably from 15 sec to 5 minutes. The polymer composition produced by the above process is next made into a film by extrusion or calendaring. The method for forming the film may be a usual method for forming a film from a thermoplastic resin or thermoplastic elastomer.

The thus obtained thin film has a structure of a matrix of the thermoplastic resin (A) in which the elastomer component (B) is dispersed as a discontinuous phase. By adopting such a dispersed structure, it is possible to impart a balance of flexibility and air permeation preventive property and obtain effects such as an improvement of resistance to heat deformation and improvement of water resistance. Further, since thermoplastic processing becomes possible, it is possible to form a film such as by extrusion or calendaring. The method for forming the film may be a usual method for forming a film from a thermoplastic resin or thermoplastic elastomer.

When the solubilities of the above specified thermoplastic resin and elastomer component differ, it is preferable to add a suitable compatibilizer as a third component. By mixing a compatibilizer into the system, the surface tension between the thermoplastic resin and the elastomer component falls and, as a result, the particles of the rubber forming the dispersed phase will become finer, and therefore, the properties of the two components will be more effectively expressed. As such a compatibilizer, generally it is possible to use a copolymer having the structure or both or one of the thermoplastic resin and elastomer component or a structure of a copolymer having an epoxy group, carbonyl group, halogen group, amine group, oxazoline group, hydroxy group, etc. capable of reacting with the thermoplastic resin or elastomer component. These may be selected according to the type of the thermoplastic resin and elastomer component to be mixed, but as the ones which are normally used, a styrene/ethylene/butylene block copolymer (SEBS) and its maleic acid modified form, EPDM: EPDM/styrene, or EPDM/acrylonitrile graft copolymer and their maleic acid modified forms, styrene/maleic acid copolymer, reactive phenoxy thermoplastic resin, etc. may be mentioned. The amount of the compatibilizer blended is not particularly limited, but preferably is 0.5 to 10 parts by weight, based upon 100 parts by weight of the polymer component (total of the thermoplastic resin and elastomer component).

The ratio between the specific thermoplastic resin (A) and the elastomer component (B) when blending a thermoplastic resin and elastomer is not particularly limited and may be suitably determined considering the balance between the thickness of the film, the air permeation preventive property, and the flexibility, but the preferable range is a ratio of (A)/(B) of 10/90 to 90/10, more preferably 15/85 to 90/10.

The polymer composition of the present invention may have mixed in it, in addition to the above essential polymer component, the above compatibilizer polymer and other polymers to an extent not impairing the properties required by the tire use polymer composition of the present invention. The objects of mixing in the other polymers are to improve the compatibility of the thermoplastic resin and elastomer component, to improve the film forming ability of the material, to improve the heat resistance, and to reduce costs. As the materials used for these, for example, polyethylene (PE), polypropylene (PP), polystyrene (PS), ABS, SBS, polycarbonate (PC), etc. may be mentioned. Further, polyethylene, polypropylene, and other olefin copolymers, their maleic acid modified forms, and glycidyl group introduced forms may be mentioned. The polymer composition according to the present invention may also have mixed in it agents generally mixed into polymer formulations such as fillers, carbon black, quartz powder, calcium carbonate, alumina, and titanium oxide to an extent not impairing the requirements of the air permeation coefficient and Young's modulus.

Further, the vulcanization agent, vulcanization aids, vulcanization conditions (e.g., temperature and time), etc. at the dynamic vulcanization may be suitably determined depending upon, the composition of the elastomer component added and are not particularly limited.

As the vulcanization agent, a general rubber vulcanization agent (cross-linking agent) may be used. Specifically, as a sulfur vulcanization agent, powdered sulfur, precipitated sulfur, high dispersion sulfur, surface treated sulfur, insoluble sulfur, dimorpholine disulfide, alkylphenol disulfide, and others may be mentioned. For example, they may be used in amounts of about 0.5 to 4 phr (parts by weight per 100 parts by weight of rubber component (polymer)).

Further, as an organic peroxide vulcanization agent, benzoyl peroxide, t-butyl hydroperoxide, 2,4-dichlorobenzoyl peroxide, 2,5-dimethyl-2,5-di(t-butylperoxy)hexane, 2,5-dimethylhexane-2,5-di(peroxylbenzoate), etc. may be mentioned and for example may be used in amounts of 1 to 15 phr.

Further, as a phenol resin vulcanization agent, a bromide of an alkylphenol resin or a mixed cross-linking system containing stannous chloride, chloroprene, or another halogen donor and an alkylphenol resin may be mentioned and used in for example an amount of 1 to 20 phr.

In addition, zinc white (about 5 phr), magnesium oxide (about 4 phr), litharge (about 10 to 20 phr), p-quinone oxime, p-dibenzoylquinone oxime, tetrachloro-p-benzoquinone, poly-p-dinitrosobenzene (about 2 to 10 phr), and methylenedianiline (about 0.2 to 10 phr) may be mentioned.

Further, optionally, a vulcanization accelerator may be added. As the vulcanization accelerator, an aldehyde-ammonia, guanidine, thiazole, sulfenamide, thiuram, dithionate, thiourea family, or other general vulcanization accelerator may be used in an amount, for example, of about 0.5 to 2 phr.

Specifically, as an aldehyde-ammonia vulcanization accelerator, hexamethylene tetramine etc.,

as a guanidine vulcanization accelerator, diphenyl guanidine etc.,

as a thiazole vulcanization accelerator, dibenzothiazyl disulfide (DM), 2-mercaptobenzothiazole and its Zn salt, cyclohexylamine salt, etc.,

as a sulfenamide vulcanization accelerator, cyclohexylbenzothiazyl sulfenamide (CBS), N-oxydiethylene benzothiazyl-2-sulfenamide, N-t-butyl-2-benzothiazolesulfenamide, 2-(thymolpolynyldithio) benzothiazole, etc.,

as a thiuram vulcanization accelerator, tetramethylthiuram disulfide (TMTD), tetraethylthiuram disulfide, tetramethylthiuram monosulfide (TMTM), dipentamethylenethiuram tetrasulfide, etc.,

as a dithionate vulcanization accelerator, Zn-dimethyl dithiocarbamate, Zn-diethyl dithiocarbamate, Zn-di-n-butyl dithiocarbamate, Zn-ethylphenyl dithiocarbamate, Te-diethyl dithiocarbamate, Cu-dimethyl dithiocarbamate, Fe-dimethyl dithiocarbamate, pipecoline pipecolyldithiocarbamate, etc., and

as a thiourea vulcanization accelerator, ethylene thiourea, diethyl thiourea, etc. may be mentioned.

Further, as a vulcanization acceleration aid, a general rubber use aid may be used together. For example, zinc white (about 5 phr), stearic acid or oleic acid and their Zn salts (about 2 to 4 phr) etc. may be used.

EXAMPLES

The present invention will now be further illustrated by, but is by no means limited to, the following Examples.

The following Materials A to E were used to prepare slit film having the thicknesses shown in Table 1 and Table 2. These slit films were each spirally wrapped around the outer circumference of a tire making drum with the overlap shown in Table 1 and Table 2. A carcass layer was superposed on top and then the usual method used to form a green tire. Next, the green tire was vulcanized to produce a pneumatic tire having a tire size 165SR13 (rim size: 13 x 41/2-J) (Examples 1 to 12 of the present invention, Comparative Examples 1 and 2, and Conventional Examples 1 and 2).

Each of the tires obtained was evaluated by the following methods as to its making productivity, splice opening, air leakage (pressure drop), and tire mass. The results are shown together in Table 1 and Table 2. As the materials of the slit film, the following Materials A to D were used. Note that the "parts" in the materials are all "parts by weight".

Material A: Material comprised of 28 parts of nylon 6 (N6) (CM4061 made by Toray), 42 parts of nylon MXD6 (MXD6) (RENY 6002 made by Mitsubishi Gas Chemical), 30 parts of maleic acid modified ethylene propylene rubber (M-EPM), and 0.18 part of methylene dianiline and having air permeation coefficient of $2.13 \times 10^{-12}$ cm$^3$·cm/cm$^2$·sec·cmHg and Young's modulus of 257 MPa.

Material B: Material comprised of 25.2 parts of nylon 6 (N6) (CM4061 made by Toray), 37.8 parts of nylon MXD6 (MXD6) (RENY 6002 made by Mitsubishi Gas Chemical), 48.9 parts of Master Batch A (100 parts of modified butyl rubber, that is, bromide of isoprene-p-methylstyrene copolymer, EXXPRO 89-4 made by Exxon Chemical; 60 parts of carbon black GPF, Seast V made by Tokai Carbon; 1 part of stearic acid; 10 parts of petroleum family hydrocarbon resin, Escorez 1102 made by Esso; and 10 parts of paraffin family process oil), 10 parts of Hilex Million 240M (EEA) made by Mitsui Petrochemical, 1.5 parts of zinc oxide, 0.5 part of DM, and 0.3 part of sulfur and having air permeation coefficient of $0.63 \times 10^{-12}$ cm$^3$·cm/cm$^2$·sec·cmHg and Young's modulus of 317 MPa.

Material C: Material comprised of 25.2 parts of nylon 6 (N6) (CM4061 made by Toray), 37.8 parts of nylon MXD6 (MXD6) (RENY 6002 made by Mitsubishi Gas Chemical), 27.0 parts of Br-(polyisobutylene-p-methylstyrene) (EXXPRO 89-4 made by Exxon Chemical), and 10 parts of nylon 6/nylon 66/nylon 610 (CM4001 made by Toray) and having air permeation coefficient of $0.63 \times 10^{-12}$ cm$^3$·cm/cm$^2$·sec·cmHg and Young's modulus of 317 MPa.

A film was prepared from each of the Materials A to C by first sufficiently mixing the thermoplastic resin and the elastomer component by a twin-screw kneader, then adding the cross-linking agent and dynamically vulcanizing the elastomer component. The blend of the thermoplastic resin and elastomer was then extruded into strands which were cooled and then pelletized by a resin-use pelletizer. These pellets were then melt-extruded by a single-screw extruder to form a slit film.

Material D: Nylon 6/66 copolymer (CM4061 made by Toray, air permeation coefficient of $0.65 \times 10^{-12}$ cm$^3$·cm/

cm$^2$·sec·cmHg and Young's modulus of 232 MPa)

Material E: Butyl rubber (air permeation coefficient of 55 x 10$^{-12}$ cm$^3$·cm/cm$^2$·sec·cmHg and Young's modulus of 15 MPa)

Method of Measurement of Air Permeation Coefficient of Film

This was performed based on JIS K7126 "Test Method of Gas Permeation Degree of Plastic Films and Sheets (Method A)".

Test piece: Film samples prepared in examples were used.

Test gas: Air ($N_2$:$O_2$ = 8:2)
Test temperature: 30°C

Measurement of Young's Modulus of Film

This was performed based on JIS K6251 "Test Method for Tensile Properties of Vulcanized Rubber".

Test piece: Samples of the film prepared by extrusion in the Examples were used and punched into JIS No. 3 dumbbell shapes in the direction of flow of the thermoplastic resin at the time of extrusion. A tangent was drawn against the curve of the initial strain region of the obtained stress-strain curve and the Young's modulus was found from the inclination of the tangent.

Method of Evaluation of Shapeability

When shaping the tire, cases where the material ended up elongating were evaluated as "Poor" and cases where there was no elongation as "Good". The allowable limit was evaluated as "Fair".

Method of Evaluation of Splice Opening

Cases where the splice portion (i.e., overlap portion) of the air permeation preventive layer of the vulcanized tire opened up were evaluated as "Poor" and cases where it did not open up as "Good".

Method of Testing Air Leakage (Pressure Drop)

The tire was allowed to stand for three months under conditions of an initial pressure of 200 kPa, room temperature of 21°C, and no load. The inner pressure was measured at intervals of four days and the $\alpha$ value found by recurrence to the formula:

$$Pt/Po = \exp(-\alpha t)$$

where Pt is the measured pressure, Po is the initial pressure, and t is the days elapsed. Using the $\alpha$ obtained and a t of 30 days, the drop in air pressure $\beta$ per month (%/month) was found:

$$\beta = [1-\exp(-\alpha t)] \times 100$$

Table 1

| | Example of Present Invention | | | | | | | | | |
|---|---|---|---|---|---|---|---|---|---|---|
| | 1 | 2 | 3 | 4 | 5 | 6 | 7 | 8 | 9 | 10 |
| Structure of air permeation preventive layer | Long film strip wound in spiral | Long film strip wound in spiral | Long film strip wound in spiral | Long film strip wound in spiral | Long film strip wound in spiral | Long film strip wound in spiral | Long film strip wound in spiral | Long film strip wound in spiral | Long film strip wound in spiral | Long film strip wound in spiral |
| Material of air permeation preventive layer | A | B | C | D | B | B | B | B | B | B |
| Thickness of air permeation preventive layer (mm) | 0.1 | 0.1 | 0.1 | 0.1 | 0.02 | 1.1 | 0.1 | 0.1 | 0.1 | 0.1 |
| Width W of film strips (mm) | 50 | 50 | 50 | 50 | 50 | 50 | 50 | 5 | 10 | 100 |
| Overlap width of film strip | 0.2W | 0.2W | 0.2W | 0.2W | 0.2W | 0.2W | 0.2W | 0.2W | 0.2W | 0.2W |
| Thickness of tiegum layer (mm) | - | - | - | - | - | - | 0.5 | - | - | - |
| Moldability | Good | Good | Good | Good | Fair | Good | Good | Good | Good | Good |
| Splice opening | Good | Good | Good | Good | Good | Good | Good | Good | Good | Good |
| Pressure loss (%/month) | 0.8 | 0.3 | 0.3 | 0.3 | 1.5 | 0.03 | 0.3 | 0.3 | 0.3 | 0.3 |
| Tire mass (kg) | 6.40 | 6.40 | 6.40 | 6.40 | 6.36 | 6.95 | 6.68 | 6.40 | 6.40 | 6.40 |

EP 0 854 054 B1

Table 2

| | Example of Present Invention | | | Comparative Example | | Conventional Example | |
|---|---|---|---|---|---|---|---|
| | 11 | 12 | 13 | 1 | 2 | 1 | 2 |
| Structure of air permeation preventive layer | Long film strip wound in spiral | Long film strip wound in spiral | Long film strip wound in spiral | Long film strip wound in spiral | Long film strip wound in spiral | Sheet wrapped once | Sheet wrapped once |
| Material of air permeation preventive layer | B | B | B | B | B | B | E |
| Thickness of air permeation preventive layer (mm) | 0.1 | 0.1 | 0.1 | 0.01 | 1.2 | 0.1 | 0.5 |
| Width W of film strip (mm) | 50 | 50 | 50 | 50 | 50 | - | - |
| Overlap width of film strip (mm) | 0.1W | 0.4W | 0.5W | 0.2W | 0.2W | - | - |
| Thickness of tiegum layer (mm) | - | - | - | - | - | - | 0.7 |
| Moldability | Good | Good | Good | Poor | Good | Good | Good |
| Splice opening | Good | Good | Good | Good | Good | Poor | Good |
| Pressure loss (%/month) | 0.3 | 0.3 | 0.3 | 2.5 | 0.03 | 0.8 | 2.7 |
| Tire mass (kg) | 6.40 | 6.40 | 6.40 | 6.36 | 7.00 | 6.40 | 7.00 |

In Table 1, Examples 1 to 4 of the present invention show cases of different materials, Examples 5 to 7 of the present invention show cases of different thicknesses of the air permeation preventive layer, and Examples 8 to 10 of the present invention show cases of different widths of the slit films. Further, in Table 2, Examples 11 to 13 of the present invention show cases of different widths of overlap of the slit films, Comparative Examples 1 and 2 show cases where the thickness of the air permeation preventive layer (same as thickness of the strips of film) is either too small (Comparative Example 1) or too large (Comparative Example 2), and Prior Art Examples 1 and 2 show cases where sheets comprised of materials not covered by the invention are wrapped once around the outer circumference of the tire making drum to form the air permeation preventive layer.

As will be understood from Table 1 and Table 2, Examples 1 to 12 of the present invention are superior to Comparative Examples 1 and 2 and Conventional Examples 1 and 2 in being lighter in weight and better in air permeation preventive property, being free from splice opening, and being better in shapeability.

INDUSTRIAL APPLICABILITY

As explained above, the pneumatic tire of the present invention is light in weight and superior in air permeation preventive property, superior in shapeability, and free from splice opening in the air permeation preventive layer. Further, according to the process for producing of a pneumatic tire of the present invention, it is possible to efficiently produce a pneumatic tire having the above performance.

**Claims**

1.   A pneumatic tire having an air permeation preventive layer at the inside wall surface of the tire formed by adhering a film to the inside wall surface, wherein the film is made of a narrowly cut slit film and the slit film is spirally wound continuously in the circumferential direction of the tire with a partial overlap of the edges of the slit film so as to form the air permeation preventive layer
     **characterized in that** said film is a thermoplastic film comprising a blend of a thermoplastic resin component (A) and an elastomer component (B) wherein the elastomer component (B) is dispersed as a discontinous phase in a matrix of the thermoplastic resin component (A) and the elastomer component (B) was dynamically vulcanized in the presence of a vulcanisation agent.

2.   A pneumatic tire as claimed in claim 1, wherein the thickness of the slit film is 0.02 to 1.1 mm.

3.   A pneumatic tire as claimed in claims 1 or 2, wherein the width of the slit film is from 5 to 100 mm.

4.   A pneumatic tire as claimed in claims 1, 2 or 3, wherein the thermoplastic resin component (A) is at least one resin selected from the group consisting of polyamide resins, polyester resins, polynitrile resins, polymethacrylate resins, polyvinyl resins, cellulose resins, fluororesins, and imide resins.

5.   A pneumatic tire as claimed in claim 1, wherein said elastomer component (B) is at least one member selected from the group consisting of diene rubbers, olefin rubbers, sulfur-containing rubbers, fluororubbers, and thermoplastic elastomers.

6.   A pneumatic tire as claimed in any one of claims 1 - 5, wherein said resin blend has an air permeation , coefficient of not more than $25 \times 10^{-12}$ $cm^3 \cdot cm/cm^2 \cdot sec \cdot cmHg$ and a Young's modulus of 1 to 500 Mpa.

7.   A process for producing a pneumatic tire comprising the steps of: continuously wrapping a narrowly cut slit film in a spiral around the outer circumference of a tire making drum with partial overlap of its edges to form an air permeation preventive layer; superposing a carcass layer on top of the air permeation preventive layer to form a green tire; and then vulcanising the green tire,
     **characterized in that** the film is a thermoplastic film as defined in claim 1.

8.   A process as claimed in claim 7, wherein said resin blend has an air permeation coefficient of not more than $25 \times 10^{-12}$ $cm^3 \cdot cm/cm \cdot sec \cdot cmHg$ and a Young's modulus of 1 to 500 Mpa.

9.   A process as claimed in claim 7 or 8 wherein the thermoplastic resin component (A) of said thermoplastic film is at least one thermoplastic resin selected from the group consisting of polyamide resins, polyester resins, polynitrile resins, polymethacrylate resins, polyvinyl resin, cellulose resins, fluororesins and imide resins and the elastomer component (B) of said thermoplastic film is selected from from the group consisting of diene rubbers, olefin rubbers, sulfur-containing rubbers, fluororubbers, and thermoplastic elastomers.

**Patentansprüche**

1. Pneumatischer Reifen mit einer die Luftpermeation verhindernden Schicht an der inneren Wandoberfläche des Reifens, die durch Anhaften einer Folie an die innere Wandoberfläche gebildet wird, worin die Folie aus einer schmal geschnittenen, längs geteilten Folie gebildet wird und die längs geteilte Folie spiralförmig kontinuierlich in der Umfangsrichtung des Reifens mit einer teilweisen Überlappung der Kanten der längs geteilten Folie gewickelt wird, um die luftpermeationsverhindernde Schicht zu bilden, **dadurch gekennzeichnet, dass** die Folie eine thermoplastische Folie ist, die eine Mischung einer thermoplastischen Harzkomponente (A) und einer Elastomerkomponente (B) umfasst, worin die Elastomerkomponente (B) als diskontinuierliche Phase in einer Matrix der thermoplastischen Harzkomponente (A) dispergiert ist und die Elastomerkomponente (B) dynamisch in Gegenwart eines Vulkanisierungsmittels vulkanisiert wurde.

2. Pneumatischer Reifen gemäss Anspruch 1, worin die Dicke der längs geteilten Folie 0,02 bis 1,1 mm beträgt.

3. Pneumatischer Reifen gemäss Anspruch 1 oder 2, worin die Breite der längs geteilten Folie 5 bis 100 mm beträgt.

4. Pneumatischer Reifen gemäss einem der Ansprüche 1, 2 oder 3, worin die thermoplastische Harzkomponente (A) mindestens ein Harz ist, das man aus der Gruppe, bestehend aus Polyamidharzen, Polyesterharzen, Polynitrilharzen, Polymethacrylatharzen, Polyvinylharzen, Celluloseharzen, Fluorharzen und Imidharzen, auswählt.

5. Pneumatischer Reifen gemäss Anspruch 1, worin die Elastomerkomponente (B) mindestens ein Mitglied, ausgewählt aus der Gruppe bestehend aus Dienkautschuk, Olefinkautschuk, schwefelhaltigem Kautschuk, Fluorkautschuk und thermoplastischen Elastomeren, ist.

6. Pneumatischer Reifen gemäss einem der Ansprüche 1 bis 5, worin die Harzmischung einen Luftpermeationskoeffizienten von nicht mehr als $25 \times 10^{-12}$ cm$^3$·cm/cm$^2$·sek·cmHg und einen Young-Modul von 1 bis 500 MPa aufweist.

7. Verfahren zur Herstellung eines pneumatischen Reifens, welches die folgenden Schritte umfasst: das kontinuierliche Umwickeln einer schmal geschnittenen, längs geteilten Folie in einer Spirale um den äusseren Umfang einer Reifenherstellungstrommel herum, mit einer teilweisen Überlappung ihrer Kanten unter Bildung einer luftpermeationsverhindernden Schicht; das Überlagern einer Karkassenschicht oben auf der luftpermeationsverhindernden Schicht unter Bildung eines Reifenrohlings; und dann das Vulkanisieren des Reifenrohlings, **dadurch gekennzeichnet, dass** die Folie eine thermoplastische Folie ist, wie sie in Anspruch 1 definiert ist.

8. Verfahren gemäss Anspruch 7, worin die Harzmischung einen Luftpermeationskoeffizienten von nicht mehr als $25 \times 10^{-12}$ cm$^3$·cm/cm$^2$·sek·cmHg und einen Young-Modul von 1 bis 500 MPa aufweist.

9. Verfahren gemäss Anspruch 7 oder 8, worin die thermoplastische Harzkomponente (A) der thermoplastischen Folie mindestens ein thermoplastisches Harz ist, das man aus der Gruppe, bestehend aus Polyamidharzen, Polyesterharzen, Polynitrilharzen, Polymethacrylatharzen, Polyvinylharz, Celluloseharzen, Fluorharzen und Imidharzen, auswählt und die Elastomerkomponente (B) der thermoplastischen Folie aus der Gruppe, bestehend aus Dienkautschuk, Olefinkautschuk, schwefelhaltigem Kautschuk, Fluorkautschuk und thermoplastischen Elastomeren, ausgewählt wird.

**Revendications**

1. Pneu ayant une couche empêchant la perméabilité à l'air sur la surface de la paroi interne du pneu formée en collant un film sur la surface de la paroi interne, dans lequel le film est fait d'un film découpé en bandelettes étroites et le film découpé en bandelettes est enroulé en spirale en continu dans le sens circonférentiel du pneu avec un recouvrement partiel des bords du film découpé en bandelettes afin de former la couche empêchant la perméabilité à l'air **caractérisé en ce que** ledit film est un film thermoplastique comprenant un mélange d'un composant de résine thermoplastique (A) et d'un composant élastomère (B) dans lequel le composant élastomère (B) est dispersé en tant que phase discontinue dans une matrice du composant de résine thermoplastique (A) et le composant élastomère (B) était vulcanisé de manière dynamique en présence d'un agent de vulcanisation.

**2.** Pneu selon la revendication 1, dans lequel l'épaisseur du film découpé en bandelettes est de 0,02 à 1,1 mm.

**3.** Pneu selon la revendication 1 ou 2, dans lequel la largeur du film découpé en bandelettes est de 5 à 100 mm.

**4.** Pneu selon la revendication 1, 2 ou 3, dans lequel le composant de résine thermoplastique (A) est au moins une résine choisie dans le groupe se composant des résines de polyamide, des résines de polyester, des résines de polynitrile, des résines de polyméthacrylate, des résines de polyvinyle, des résines de cellulose, des résines fluorées, et des résines d'imide.

**5.** Pneu selon la revendication 1, dans lequel ledit composant élastomère (B) est au moins un membre choisi dans le groupe se composant des caoutchoucs diéniques, des caoutchoucs oléfiniques, des caoutchoucs contenant du soufre, des caoutchoucs fluorés, et des élastomères thermoplastiques.

**6.** Pneu selon l'une quelconque des revendications 1 à 5, dans lequel ledit mélange de résines possède un coefficient de perméabilité à l'air non supérieur à $25 \times 10^{-12}$ $cm^3 \cdot cm/cm^2 \cdot sec \cdot cmHg$ et un module de Young de 1 à 500 Mpa.

**7.** Procédé de production d'un pneu comprenant les étapes consistant à enrouler en continu un film découpé en bandelettes en bandelettes étroites en une spirale autour de la circonférence extérieure d'un pneu formant tambour avec un recouvrement partiel de ses bords pour former une couche empêchant la perméabilité à l'air; à superposer une couche de carcasse au-dessus de la couche empêchant la perméabilité à l'air pour former un pneu vert; puis à vulcaniser le pneu vert,
**caractérisé en ce que** le film est un film thermoplastique comme défini dans la revendication 1.

**8.** Procédé selon la revendication 7, dans lequel ledit mélange de résines possède un coefficient de perméabilité à l'air non supérieur à $25 \times 10^{-12}$ $cm^3 \cdot cm/cm^2 \cdot sec \cdot cmHg$ et un module de Young de 1 à 500 Mpa.

**9.** Procédé selon la revendication 7 ou 8 dans lequel le composant de résine thermoplastique (A) dudit film thermoplastique est au moins une résine thermoplastique choisie dans le groupe se composant des résines de polyamide, des résines de polyester, des résines de polynitrile, des résines de polyméthacrylate, des résines de polyvinyle, des résines de cellulose, des résines fluorées, et des résines d'imide, et le composant élastomère (B) dudit film thermoplastique est choisi dans le groupe se composant des caoutchoucs diéniques, des caoutchoucs oléfiniques, des caoutchoucs contenant du soufre, des caoutchoucs fluorés, et des élastomères thermoplastiques.

# Fig.1

# Fig.2

# Fig.3

# Fig.4

TIRE CIRCUMFERENTIAL DIRECTION

# Fig.5

# Fig.6

START OF WINDING    END OF WINDING

# Fig.7

END OF WINDING                    START OF WINDING

20

40

# Fig.8

END OF
START OF WINDING      WINDING      START OF WINDING

20

40

# Fig.9

START OF
END OF WINDING      WINDING      END OF WINDING

20

40

# Fig.10

START OF
WINDING

END OF
WINDING

START OF
WINDING

END OF
WINDING

20

40

# Fig.11

END OF
WINDING

START OF
WINDING

END OF
WINDING

START OF
WINDING

20

40

LIST OF REFERENCE NUMERALS

1... Carcass layer

2... Resin film

3... Splice portion

5... Splice opening

10... Bead core

11... Carcass layer

14... Air permeation preventive layer

20... Slit film

40... Tire making drum

50... Adhesive layer